**Europäisches Patentamt**

**European Patent Office**

**Office européen des brevets**

(19)

(11) **EP 1 278 049 A1**

(12) ## EUROPEAN PATENT APPLICATION

(43) Date of publication:
**22.01.2003 Bulletin 2003/04**

(51) Int Cl.⁷: **G01J 3/10**, G01J 3/46

(21) Application number: **01810713.6**

(22) Date of filing: **18.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **CSEM**
**Centre Suisse d'Electronique et de Microtechnique SA**
**2007 Neuchâtel (CH)**

(72) Inventors:
  • **Boer, Gerben Christiaan**
    **2072 St. Blaise (CH)**
  • **Dangel, Roger Franz**
    **8903 Birmensdorf (CH)**
  • **Seitz, Peter**
    **8902 Urdorf (CH)**
  • **Cottier, Kaspar**
    **2000 Neuchâtel (CH)**
  • **Scharf, Toralf**
    **2000 Neuchâtel (CH)**

(74) Representative:
    **Patentanwälte Feldmann & Partner AG**
    **Kanalstrasse 17**
    **8152 Glattbrugg (CH)**

(54) **Illumination module for a reflection spectrometer**

(57)      The illumination module (2) is for illuminating a plane measurement spot (3) of a reflection spectrometer (1). It comprises a plurality of light-emitting diodes (41.1-41.8). Light (21) is guided from the light-emitting diodes (41.1-41.8) to the measurement spot (3) by a circular conical mirror (6), such that the angle of incidence of the light (21) is essentially 45°. First (5.1-5.8) and second (7) apertures delimit the angular range of light. The reflection spectrometer (1) comprises the illumination module (2) described above, a dispersive optical element (8) for analyzing light emerging from the measurement spot (3), and a detector array (9).

Fig. 2(a)

Fig. 2(b)

**EP 1 278 049 A1**

## Description

Field of the invention

This invention lies in the field of reflection spectroscopy and colorimetry. It relates to an illumination module for a reflection spectrometer, according to the preamble of the independent claim. The invention also relates to a reflection spectrometer, preferably a polarization-interferometric Fourier-transform spectrometer, comprising the illumination module.

Background of the invention

There exist many different types of spectrometers on the market. Some of them are compact devices able to measure the spectrum of light reflected from a sample. Gretag-Macbeth, Dr Lange, Datacolor are the names of the companies offering such devices. Those spectrometers are able to measure visible light (about 400-700 nm). To analyze light, they mostly use holographic gratings of very high quality, e.g., manufactured by the LIGA (Lithographie, Galvanformung und Abformung; lithography, plating and molding) process. The illumination module in most cases comprises a pulsed xenon or halide lamp that covers the whole visible spectrum, and some optics to guide the light on the measurement spot. The problems of such illumination modules are the low compactness of the module, heat production and the short lifetime of the lamp. The lamps used are also quite expensive.

There are also many commercially available devices able to measure colorimetric coordinates. They either contain light-emitting diodes (LEDs) of three different colors (blue, red, green) or use suitable color filters for corresponding colors. Each LED (of different color) consecutively illuminates the sample. The responses (corresponding to the tristimuli responses of the eye) are evaluated by a photodiode and the colorimetric coordinates are calculated. However, such devices are not able to evaluate a complete spectrum and not very precise.

Some Fourier-transform spectrometers (FTSs) based on a Michelson-type interferometer are commercially available. They are mostly made for laboratory purposes and are used to measure light in the near infrared (NIR) region (e.g., a spectrometer by the company Perkin-Elmer). However, such systems are not portable and are very sensitive to shocks.

They are very large and massive. Therefore, they are not suitable for hand-held applications.

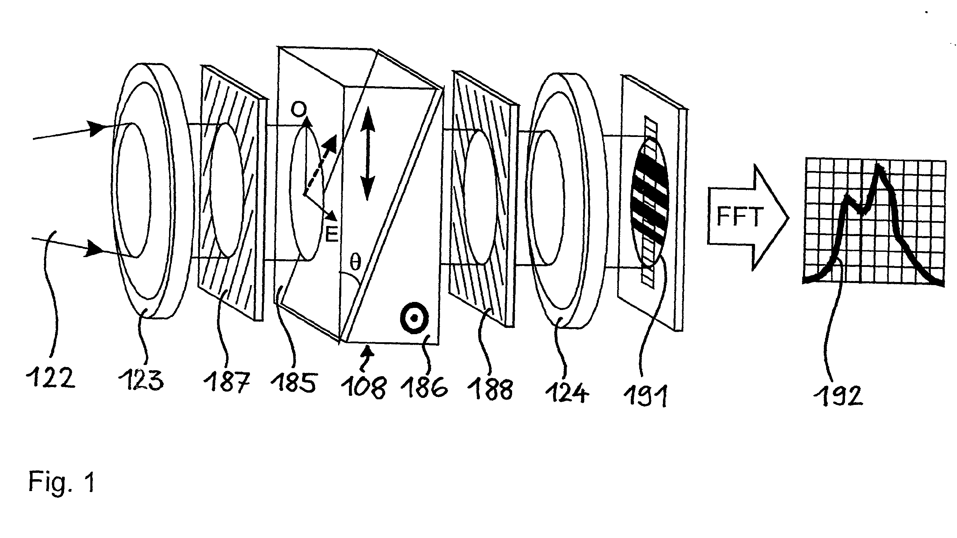

Conventional FTSs are based either on the well-known Michelson interferometer or on the less common polarization interferometer (cf. Figure 1). For both types there exist static and dynamic setups, i.e., setups with or without moving optical elements, respectively.

With regard to a low-cost miniature FTS, a Michelson interferometer does not offer a suitable solution due to its expensive mirrors and beam splitters of high optical quality and the demanding positioning requirements.

Since 1993, more promising approaches were made by inventors to realize compact FTS based on the polarization-interferometric principle. As shown in **Figure 1**, a static polarization interferometer according to the prior art comprises a commercially available Wollaston prism 108 with two wedges 185, 186 made of conventional birefringent materials as calcite or quartz. The Wollaston prism 108 is positioned between two perpendicularly (+45° and -45°) oriented linear polarizers 187, 188. Divergent incident light 122, which is to be spectrally investigated, is collimated by a collimation lens 123 and linearly polarized at 45° by the first polarizer 187. Due to the birefringence of the Wollaston prism 108 and the mutually perpendicular orientation of the polarizers 187, 188, the two wedges 185, 186 produce a laterally varying optical phase difference between the two perpendicular polarization components. The optical path difference $\Delta L$ of the two polarization components is given by

$$\Delta L = 2 \cdot x \cdot (n_e - n_o) \cdot \tan \theta ,$$

where x is the lateral displacement from the center of the prism 108, $n_o$ and $n_e$ are the ordinary and extraordinary refractive indices of the birefringent material, respectively, and $\theta$ is the wedge angle. The -45° analyzer 188 transforms this lateral phase distribution into a set of intensity variations called interferogram 191. It is well known that in case of a conventional extended light source the interferogram 191 is mainly localized within the second wedge 186. Therefore, imaging optics 124 is required to have "access" to the fringes by imaging them with high signal-to-noise contrast on a dedicated photodetector array 109. In principle, the Fourier transform 192 of the interferogram 191 provides the spectral power distribution of the incident light.

In the past, different solutions have been presented to overcome the necessity of imaging optics 124 and to allow a higher degree of miniaturization. M. Françon et al. proposed (in "Polarization Interferometers", Wiley-Interscience London, New-York, 1971) a shift of the fringes outwards by tilting the orientation of the Wollaston-prism optical axes. Further, Padgett et al. published a spectrometer design consisting of two different subsequent Wollaston prisms, which also effects an outwards shift of the interference fringes. However, all of the mentioned approaches show the drawback that rather expensive conventional birefringent crystals such as calcite or quartz are used which require a sophisticated manufacturing.

In EP-0'939'323 A1, a solution using wedge-shaped liquid-crystal (LC) cells instead of the conventional crystals is proposed. Such LC cells have the advantage to be inexpensive. This solution has been retained as a basis for a preferred embodiment of the spectrometer according to the present invention.

A serious drawback of the conventional polarization-interferometric spectrometers arises from the fact that only for small angles of light incidence, i.e., a strongly restricted field of view (FOW), a sufficient spectrometer resolution results. To overcome this limitation, J. Courtial et al. proposed (in "Design of a static Fourier transform spectrometer with increased field of view", Applied Optics, Vol. 35, No. 34, December 1, 1996) an increased FOW by including an achromatic half-wave plate or by combining two Wollaston prisms with opposite signs of birefringence.

However, the miniaturization potential of this design is strongly limited due to the relatively large number of optical components required.

For colorimetry, the illumination geometry is described in ISO standards, Ref. No. ISO 7724/1-1984 (E), Paints and Varnishes, Colorimetry, Part 1: Principles. Those standards (especially the "10° observer standard") mainly lay down that:

(1) The incident light should be at 45° with respect to the sample;
(2) The aperture of the light source should be less then ±5°; and
(3) Only a range of ±5° (with respect to the sample-surface normal) of the reflected light should be collected for spectroscopic analysis.

Summary of the invention

It is an object of the invention to provide an illumination module and a reflection spectrometer that overcome the major disadvantages of prior art. In particular, the illumination module should be mechanically robust, compact and inexpensive. Light losses should be minimized and the ISO standards should be met. The spectrometer and the illumination module should preferably be driven at low voltage, have a low energy consumption and a long lifetime. Its measuring head should be compact; it is desirable to design it in the form of a pen. These objects are solved by the illumination module as defined in the first claim, and by a reflection spectrometer comprising this illumination module.

Throughout this document, terms such as "optical" or "light" are used for the sake of simplicity. However, the invention is applicable to a wide range of the electromagnetic spectrum comprising the ultraviolet (UV), the visible (VIS) and the infrared (IR) range, and is thus not limited to the use with visible electromagnetic radiation.

The role of the illumination module is to illuminate the sample to be measured under a certain angle. The light vertically re-emitted from the sample is collected and analyzed by the spectrometer.

The compact illumination module according to the invention can be divided into two parts:

A. light-emitting means for illumination and
B. light-guiding means for guiding the light to the measurement spot.

In a preferred embodiment of the invention, the light-emitting means are an annular LED configuration and the light-guiding means are a concentric mirror.

**A. The light-emitting means**

For colorimetry, the light-emitting means or light source must have at least a spectrum that covers the whole visible range form 380 nm to 750 nm. Ideally, all the emitted energy of the light source should be equally distributed in the visible range.

The present invention uses LEDs as light-emitting means. LEDs have become interesting light sources for many applications. They are now commercially available in various colors, including "white". An appropriate combination of different LEDs that emit light simultaneously can yield a good approximation of a white spectrum. Furthermore, the light intensity of the different LEDs can be tuned by applying adequate voltage (or current). The combination of an appropriate set of colored LEDs and an adequate applied current enables generation of a white spectrum (in the visible region). Also white LEDs with a broad emission spectrum can be used for illumination.

Compared to prior-art light sources used in reflection spectrometry (colorimetry), such as incandescent-filament or gas-discharge lamps, LEDs present the advantages to be driven at low voltage, to have a low energy consumption, to have a long lifetime and to be cheap. LEDs are mechanically robust and compact.

**B. The light-guiding means**

The light-guiding means should meet the ISO standards mentioned above.

If the light source is spatially extended, it should placed at a certain distance from the measurement spot in order to fulfill the requirement No. (2) mentioned above. For instance, when using an LED with a diameter of D = 3 mm, the minimum distance $d_{min}$ between the LED and the measurement spot should be

$$d_{min} = \frac{D}{2\sin\alpha} \approx \frac{D}{2\alpha} \approx 17 \text{ mm}$$

in order to achieve an aperture of $\alpha = 5°$. If the LEDs directly illuminated the measurement spot, the diameter of the spectrometer would be at least 35 mm.

Accordingly, the illumination module according to the invention, for illuminating a plane measurement spot, comprises means for emitting light with at least two light-emitting diodes. The illumination module further comprises means for guiding at least a part of said emitted light from said light-emitting means towards said measurement spot. These light-guiding means comprise a circular conical mirror for reflecting light emitted by said light-emitting diodes towards said measurement spot, the axis of said mirror being perpendicular to the plane of said measurement spot.

The reflection spectrometer according to the invention comprises an illumination module according to the invention, a dispersive optical element for analyzing light coming from said measurement spot, and a detector array for a spatially resolved detection of light coming from said dispersive optical element. In a preferred embodiment, the dispersive optical element comprises a thin wedge-shaped cavity essentially delimited by a first wedge surface and a second wedge surface, said first and second wedge surfaces being essentially transparent for light coming from said illumination module, and a liquid crystal within said cavity; said first wedge surface and/or said second wedge surface comprising a pretilt polyimide being in contact with said liquid crystal.

The combination of the a plurality of colored LEDs with the circular conical mirror gives a compact robust and low-cost solution for an illumination module for reflection spectrometry in the visible range. This module is ideal for hand-held colorimeters that could have the shape of a pen.

Brief description of the drawings

The invention and, for comparison, the prior art are described in greater detail hereinafter relative to the attached schematic drawings.

Figure 1    shows a perspective view of the principle of a polarization interferometer used as a Fourier-transform spectrometer based on a Wollaston prism, according to the prior art.

Figure 2    shows (a) a side view and (b) a top view of a reflection spectrometer with an illumination module according to the invention.

Figure 3    shows a spectrum of an illumination module comprising blue and white LEDs.

Figure 4    shows perspective views of various steps of the method for manufacturing the spectrometer according to the invention.

Figure 5    shows a side view of a spectrometer according to the prior art, with a conventional polyimide, (a) without detector, and (b) with a detector.

Figure 6    shows a side view of a spectrometer according to the invention, with a high-pretilt polyimide, (a) without detector, and (b) with a detector.

Figures 7-9    show (a) a side view and (b) a front view, wherein the wedges are slightly shifted with respect to each other for didactic reasons, of three different embodiments of LC cells for use in a spectrometer according to the invention.

Description of the preferred embodiments

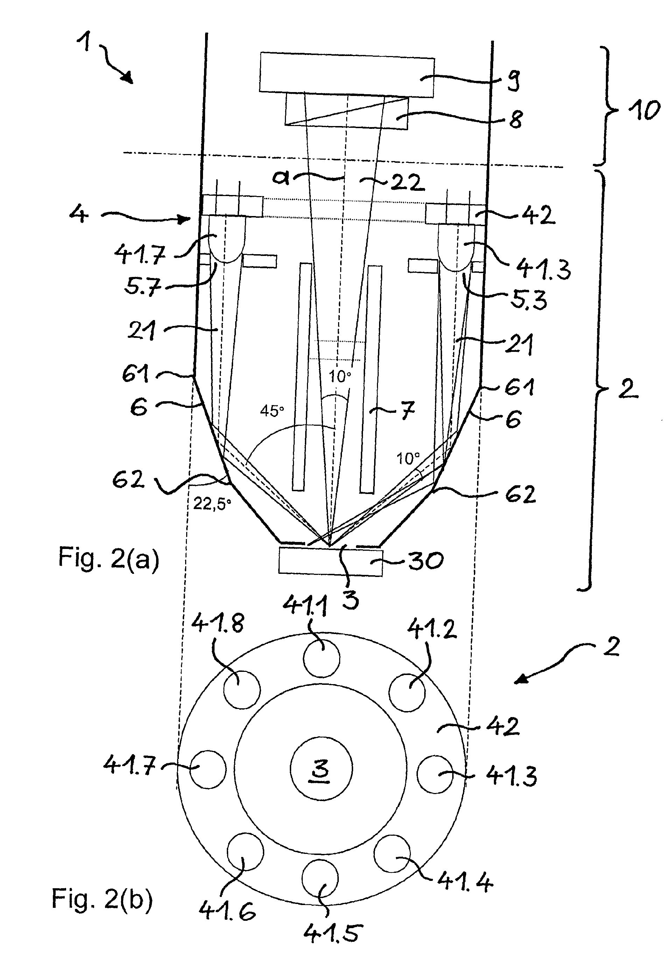

**Figures 2(a) and 2(b)** show a schematic representation of a reflection spectrometer 1 with an illumination module 2 according to the invention. The function of the illumination module 2 is to illuminate a sample 30 to be measured under a certain angle. Light 22 reflected from the sample 30 placed at a measurement spot 3 is collected and analyzed by a spectrometer module 10 described below.

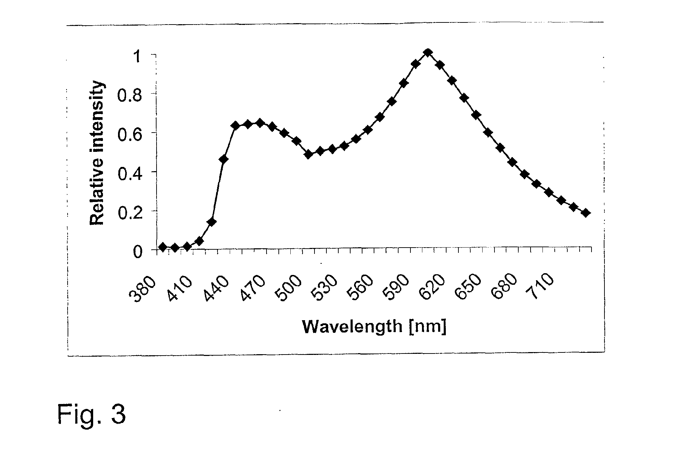

The illumination module 2 according to the invention is based on a preferably annular LED illumination unit 4 and a concentric circular conical mirror 6. It preferably has rotational symmetry with respect to a central axis a that is perpendicular to the plane of the measurement spot 3. Light 21 is emitted by LEDs 41.1-41.8 disposed in an annular configuration. The LEDs 41.1-41.8 may be white LEDs or a combination of various colored LEDs. They are preferably mounted on a printed circuit board (PCB) 42 with electrical connections (not shown). This offers the advantage that the PCB 42 with the LEDs 41.1-41.8 can be replaced by another PCB with other LEDs; thus the illumination module 2 can easily be adapted to various applications (cf. Fig. 3).

A set of first apertures 5.1-5.8 positioned close to the LEDs 41.1-41.8 delimits the respective apertures of the LEDs 41.1-41.8 to about ±5° in order to meet ISO requirement No. (2).

The concentric tilted conical mirror 6 reflects the emitted light 21 towards the measurement spot 3. The mirror 6 is preferably inclined by 22.5° in order to reflect the vertical incident light 21 by 45°; thus ISO requirement No. (1) is met. The conical mirror 6 is arranged such that its rim 62 having a smaller diameter is turned towards the measurement spot 3, whereas its rim 61 having a larger diameter is turned away from said measurement spot 3.

The light 22 re-emitted(or reflected or scattered) by the sample 30 is limited by a second aperture 7, e.g., a tube, in order to meet ISO requirement No. (3). Consequently, only the light remitted in a range of ±5° reaches the spectrometer module 10 for analysis. Of course, an even more narrow tube 7 could be used in order to obtain a smaller angular range of, e.g., ±2°. A very small angular range is preferred because it guarantees that only the desired color information is obtained, excluding undesired influences on the measurement. The LEDs 41.1-41.8 are arranged around and close by the tube 7. A lens or another appropriate optical system (not shown) for collimating the re-emitted light 22 could be mounted behind the second aperture 7.

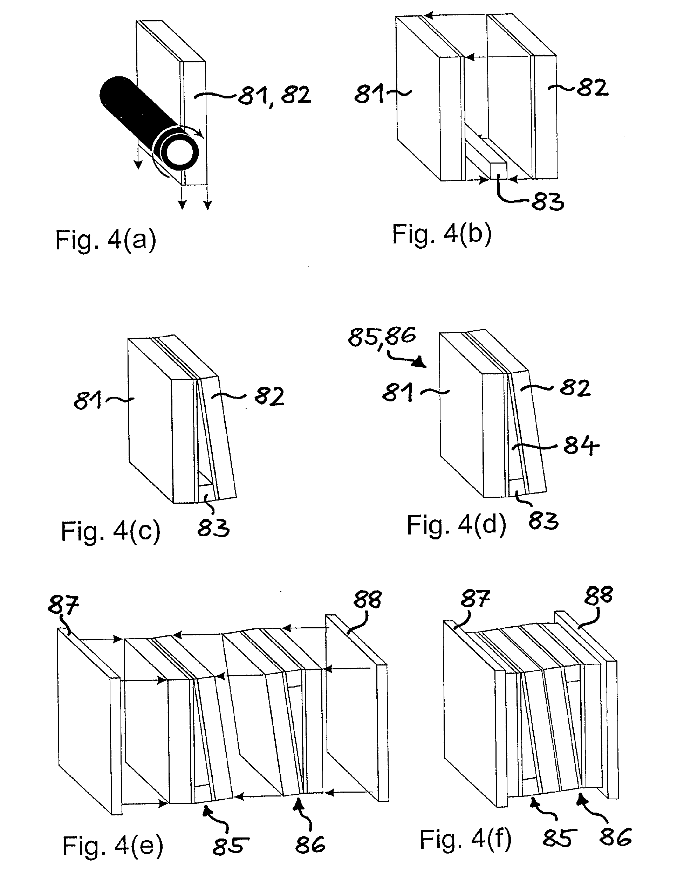

The light 22 emerging from the illumination module 2 is separated into its various spectral components by a dispersive optical element 8. A preferred embodiment of this element 8 is discussed with reference to Figs. 4-9. The light is detected by a spatially resolving detector array 9. A well-known one- or two-dimensional optoelectronic semiconductor detector array may be used for this purpose.

**Figure 3** shows a typical spectrum measured for an illumination system composed of four white LEDs 41.1, 41.3, 41.5, 41.7 and four blue (440 nm) LEDs 41.2, 41.4, 41.6, 41.8 (cf. Fig. 2(b)). Other LED combinations are also possible depending of the application. For most applications, the desired ideal illumination spectrum is a constant value in the visible range. This is not the case in the example of Fig. 3; however, deviations from the desired spectrum can be compensated, e.g., numerically during evaluation.

The miniature spectrometer 1 according to the invention comprises the illumination module 2 described with reference to Figs. 2 and 3, in combination with a spectrometer module 10 comprising a dispersive optical element 8 and a detector array 9, as shown in Fig. 2(a). In a preferred embodiment, the spectrometer module 10 is a polarization-interferometric Fourier-transform spectrometer with a low-cost, multifunctional liquid-crystal WP as dispersive optical element 8. This embodiment is discussed in the following, with reference to **Figures 4-9**.

**Figure 4** schematically shows various steps of the method for manufacturing the spectrometer module 10. Two planar glass substrates 81, 82 are spin-coated by a "high-pretilt polyimide". By mechanical surface rubbing of the polyimide the subsequent alignment of the liquid crystals and therefore the pretilted orientation of the optical axes can be predefined **(Figure 4(a))**. By means of a thin spacer 83 the two coated substrates 81, 82 can be arranged in a well-defined wedge shape (**Figure 4(b)**) such as to form a prismatic cavity (**Figure 4 (c)**), the coatings being oriented towards each other. The cavity is filled with liquid crystal 84 (Figure 4(d)). Finally, two reversely oriented LC wedges 85, 86 are positioned between two mutually perpendicular polarizers 87, 88 (**Figure 4(e)**). The device manufactured by this method and schematically shown in **Figure 4(f)** is a dispersive optical element 8 used in a preferred embodiment of the spectrometer 1 according to the invention.

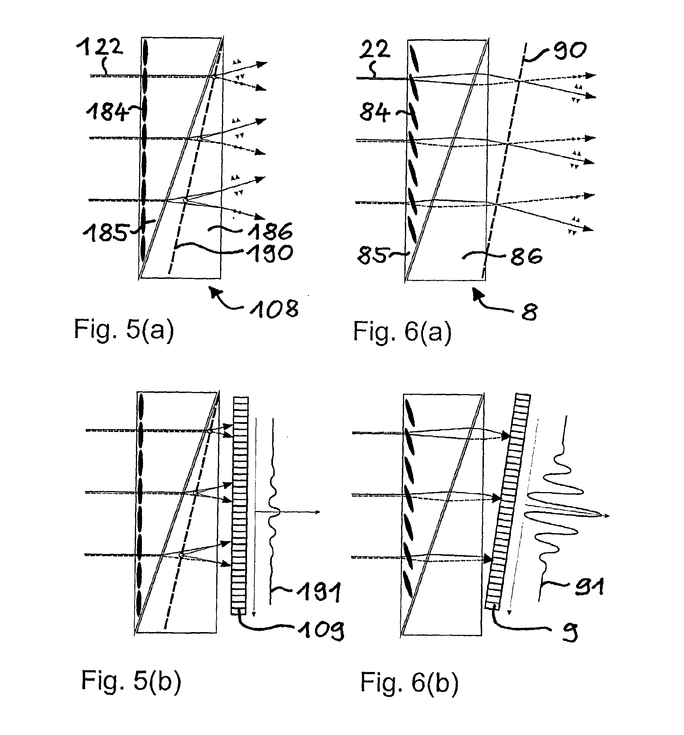

The present invention solves the general problem of polarization interferometers, i.e., the localization of the interference fringes, by exploiting the possibility of pretilting the optical axis. In **Figures 5 and 6**, the situations for an incident light beam 122, 22 consisting of two mutually perpendicular polarization components are schematically compared for a conventional spectrometer according to the state of the art and a spectrometer according to the invention, respectively.

With a conventional polyimide (**Figure 5**), the LC molecules 184 are almost parallel to the surface and the virtual plane 190 of polarization separation, i.e., the plane of maximum interference, lies within the second LC wedge 186. Outside the WP 108, if no imaging lens is used, only a low-contrast interferogram 191 can be measured.

With a "high-pretilt" polyimide (**Figure 6**), the LC molecules 84 enclose an angle of 5°-10° to the surface. This pretilt of the optical axis effects an outward shift of the plane 90 of maximum interference. With a photodetector array 9 positioned in this plane 90 a high-contrast inteferogram 91 can be detected.

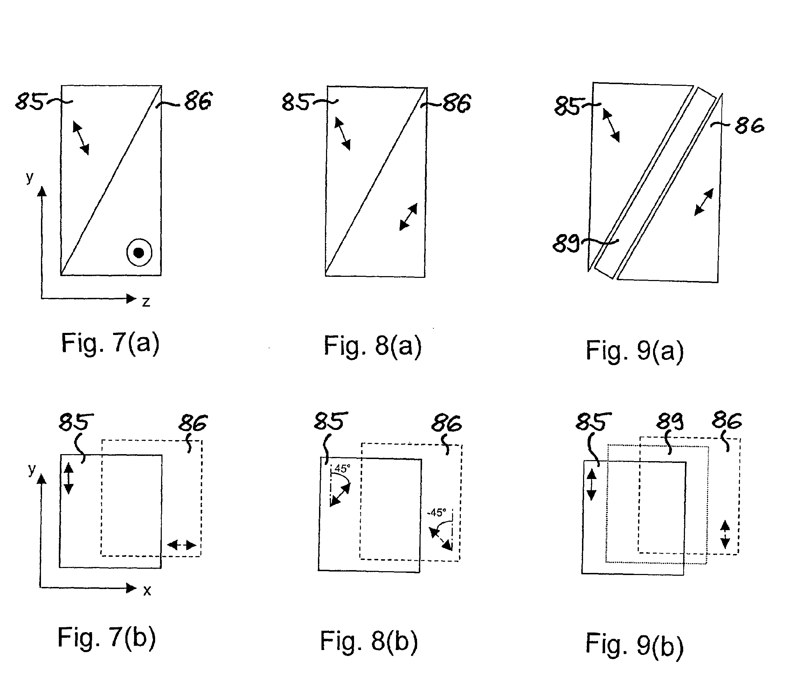

There are several possible embodiments of the LC cells 8 for use in the miniature spectrometer 1 according to the invention, with "high-pretilt" polymide which allow to extract the plane 90 of maximal interference outside the LC cell 8. In **Figures 7-9**, three none-restrictive examples of such embodiments are presented (a) in a side view and (b) in a front view, wherein the wedges or prisms 85, 86 are slightly shifted with respect to each other for didactic reasons.

The embodiment of **Figure 7** comprises two LC prism cells 85, 86 cemented by their hypotenuse. The prisms 85, 86 are placed between crossed polarizers (not shown) oriented at ±45°. The optical axis in the first prism cell 85 lies in the yz plane and is tilted by 5°-10° with respect to the input face (or y axis). The optical axis in the second prism cell 86 lies parallel (or slightly tilted by 1°-2°) to the x axis.

A second embodiment shown in **Figure 8** comprises two LC prism cells 85, 86 cemented by their hypotenuse as in the first embodiment. The prism cells 85, 86 are placed between two crossed polarizers (not shown) oriented at 0° and 90°, respectively. In the first prism cell 85, the optical axis is oriented by 45° in the xy plane and is tilted with respect to the input face. In the second prism cell 86, the optical axis is perpendicular to the one of the first cell, i.e., oriented by -45° in the xy plane and also tilted by with respect to the cell face.

A third embodiment shown in **Figure 9** comprises two prism cells 85, 86 and one twisted nematic (TN) cell 89 placed in-between. The resulting LC cell 8 is placed between mutually perpendicular polarizers (not shown) oriented at ±45°. The optical axis of the first prism cell 85 lies in the yz plane and is positively tilted with respect to the y axis (or input face). The second prism cell 86 is identical to the first one, except its optical axis that is tilted in the opposite direction (negatively tilted). Because the optical axes of the two prism cells 85, 86 are parallel, an additional TN cell 89 is placed between the two prism cells 85, 86 in order to rotate the polarization by 90°.

Of course, the three embodiments of Figs. 7-9 do not represent an exhaustive list of all possible designs that allow to extract the plane 90 of maximum contrast behind the system. Their common features are two prism-shaped LC cells 85, 86, at least one of which having a high pretilt, and two crossed polarizers 87, 88 (cf. Fig. 4(f)).

**List of reference signs**

| | |
|---|---|
| 1 | Spectrometer |
| 10 | Spectrometer module |
| | |
| 2 | Illumination module |
| 21 | Emitted light |
| 22 | Re-emitted light |
| | |
| 3 | Measurement spot |
| 30 | Sample |
| | |
| 4 | Illumination unit |
| 41.1-41.8 | LEDs |
| 42 | Printed circuit board |
| | |
| 5.1-5.8 | First apertures |
| | |
| 6 | Conical mirror |
| 61, 62 | Mirror rims |
| | |
| 7 | Second aperture |
| | |
| 8 | Dispersive optical element |
| 81, 82 | Substrates |
| 83 | Spacer |
| 84 | Liquid crystal |
| 85, 86 | Liquid-crystal wedges |
| 87, 88 | Polarizers |
| 89 | Twisted nematic cell |
| | |
| 9 | Detector array |
| 90 | Virtual plane of polarization separation |
| 91 | Interferogram |
| | |
| 122 | Incident light |
| 123 | Collimation lens |
| 124 | Imaging optics |
| | |
| 108 | Wollaston prism |
| 185, 186 | Prism wedges |
| 187, 188 | Polarizers |
| | |
| 109 | Detector array |
| 190 | Virtual plane of polarization separation |
| 191 | Interferogram |
| 192 | Fourier transform of interferogram |
| | |
| a | Central axis |
| D | LED diameter |
| d | Distance between LED and measurement spot |

| | |
|---|---|
| $\Delta L$ | Optical path difference |
| $n_o, n_e$ | Ordinary and extraordinary refractive indices |
| x | Lateral displacement |
| $\alpha$ | Aperture |
| $\theta$ | Wedge angle |

**Claims**

1. An illumination module (2), preferably for use in a reflection spectrometer (1), for illuminating a plane measurement spot (3), comprising
means (4) for emitting light (21) and
means (6) for guiding at least a part of said emitted light (21) from said light-emitting means (4) towards said measurement spot (3),
**characterized in that**
said light-emitting means (4) comprise at least two light-emitting diodes (41.1-41.8) and
said light-guiding means (6) comprise a circular conical mirror for reflecting light (21) emitted by said light-emitting diodes (41.1-41.8) towards said measurement spot (3), the axis (a) of said mirror (6) being perpendicular to the plane of said measurement spot (3).

2. The illumination module (2) according to claim 1, said illumination module (2) having rotational symmetry with respect to the axis (a) of said conical mirror (6).

3. The illumination module (2) according to any of the previous claims, wherein said light-emitting diodes (41.1-41.8) are arranged on a circle around the axis (a) of said conical mirror (6) and positioned with respect to said mirror (6) such that their emitted light (21) is directly reflected from said mirror (6) towards said measurement spot (3).

4. The illumination module (2) according to any of the previous claims, wherein said light-emitting diodes (41.1-41.8) are mounted on a common carrier element (42), and preferably on a common printed-circuit board.

5. The illumination module (2) according to any of the previous claims, wherein said light-emitting diodes (41.1-41.8) are selected such that the light (21) on said measurement spot (3) essentially covers the whole visible spectrum, and preferably comprise a white and/or a colored light-emitting diode.

6. The illumination module (2) according to any of the previous claims, wherein said light-emitting diodes (41.1-41.8) and the optical path between them and said measurement spot (3) are such that the angular range of each light-emitting diode (41.1-41.8) with respect to said measurement spot (3) is less than a pre-defined value, and preferably less than ±5°.

7. The illumination module (2) according to any of the previous claims, wherein a first aperture (5.1-5.8) is allocated to each light-emitting diode (41.1-41.8).

8. The illumination module (2) according to any of the previous claims, wherein said conical mirror (6) is inclined such that the angle of incidence of the light (21) illuminating said measurement spot (3) is essentially 45°, and preferably is inclined by 22.5° with respect to its axis (a).

9. The illumination module (2) according to any of the previous claims, wherein said conical mirror (6) is arranged such that its rim having a smaller diameter is turned towards said measurement spot (3), whereas its rim having a larger diameter is turned away from said measurement spot (3).

10. The illumination module (2) according to any of the previous claims, wherein a second aperture (7), preferably a tube being concentric with said conical mirror (6), is positioned above said measurement spot (3) such that the angular range of light (22) emerging from said measurement spot (3) and passing through said second aperture (7) is less than a pre-defined value, and preferably less than ±5°.

11. The illumination module (2) according to claim 10, wherein said light-emitting diodes (41.1-41.8) are arranged around said tube (7).

12. A reflection spectrometer (1) comprising
    an illumination module (2) for illuminating a measurement spot (3),
    a dispersive optical element (8) for analyzing light (22) emerging from said measurement spot (3), and
    a detector array (9) for a spatially resolved detection of light emerging from said dispersive optical element (8),
    **characterized in that**
    said illumination module (2) is an illumination module according to any of the previous claims.

13. The reflection spectrometer (1) according to claim 12, wherein said dispersive optical element (8) comprises a thin wedge-shaped cavity (85, 86) essentially delimited by a first wedge surface (81) and a second wedge surface (82), said first and second wedge surfaces (81, 82) being essentially transparent for light (22) emerging from said illumination module (2), and
    a liquid crystal (84) within said cavity (85, 86),
    said first wedge surface (81) and/or said second wedge surface (82) comprising a pretilt polyimide being in contact with said liquid crystal (84).

EP 1 278 049 A1

122   123   187   185   108 186 188   124   191

FFT

192

Fig. 1

EP 1 278 049 A1

Fig. 2(a)

Fig. 2(b)

Fig. 3

Fig. 4(a)

Fig. 4(b)

Fig. 4(c)

Fig. 4(d)

Fig. 4(e)

Fig. 4(f)

122

184

185

186
190

108

Fig. 5(a)

22

84

85

90

86

8

Fig. 6(a)

191

109

Fig. 5(b)

91

9

Fig. 6(b)

Fig. 7(a)

Fig. 7(b)

Fig. 8(a)

Fig. 8(b)

Fig. 9(a)

Fig. 9(b)

**European Patent Office**

## EUROPEAN SEARCH REPORT

Application Number

EP 01 81 0713

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 963 333 A (DUKE RONALD J ET AL) 5 October 1999 (1999-10-05) | 1-12 | G01J3/10 G01J3/46 |
| Y | * column 6, line 13 - column 9, line 19 * * figures 1,2,5,6,16 * | 13 | |
| D,Y | EP 0 939 323 A (SUISSE ELECTRONIQUE MICROTECH) 1 September 1999 (1999-09-01) * abstract * | 13 | |
| A | WO 01 02799 A (CAMBRIDGE RES & INSTRUMENTATIO) 11 January 2001 (2001-01-11) * page 20, line 17 - line 20 * | 13 | |

| TECHNICAL FIELDS SEARCHED (Int.Cl.7) |
|---|
| G01J G01N |

The present search report has been drawn up for all claims

| Place of search | Date of completion of the search | Examiner |
|---|---|---|
| THE HAGUE | 19 December 2001 | Jacquin, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 81 0713

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2001

| Patent document cited in search report | | Publication date | Patent family member(s) | | Publication date |
|---|---|---|---|---|---|
| US 5963333 | A | 05-10-1999 | US<br>US<br>AU<br>EP<br>JP<br>WO | 6147761 A<br>6020583 A<br>4339897 A<br>0958488 A1<br>2000512021 T<br>9811410 A1 | 14-11-2000<br>01-02-2000<br>02-04-1998<br>24-11-1999<br>12-09-2000<br>19-03-1998 |
| EP 0939323 | A | 01-09-1999 | EP<br>US | 0939323 A1<br>6222627 B1 | 01-09-1999<br>24-04-2001 |
| WO 0102799 | A | 11-01-2001 | WO | 0102799 A1 | 11-01-2001 |

EPO FORM P0459

For more details about this annex : see Official Journal of the European Patent Office, No. 12/82